# EUROPEAN PATENT APPLICATION

(11) **EP 2 083 250 A1**
(43) Date of publication of application: **29.07.2009**
(21) Application number: 08171429.7
(22) Date of filing: 12.12.2008
(51) Int. Cl.: G01F 15/14

(54) **A polymeric consumption meter with a double layer cover**

(30) Priority: 13.12.2007 EP 07123132
(71) Applicant: KAMSTRUP A/S, 8660 Skanderborg (DK)
(72) Inventor: Drachmann, Jens, 8260 Viby J (DK); Skallebæk, Anders, 8660 Skanderborg (DK); Laursen, Peter Schmidt, 8660 Skanderborg (DK)
(74) Representative: Plougmann & Vingtoft A/S

(57) **Abstract**

The present invention relates to a consumption meter, such as an ultrasonic flow meter, for measuring a quantity value corresponding to a consumed quantity, e.g. hot or cold water. The consumption meter comprises a measuring means, an electronic circuit, a display, and a casing for housing the measuring means, the electronic circuit and the display. The casing comprises a polymer-based integral casing part and a transparent cover or a cover with a transparent area. The cover comprises at least two layers, where the water permeability of the at least second layer is lower than the water permeability of the first layer.

## Description

### FIELD OF THE INVENTION

The present invention relates to a consumption meter for measuring a quantity value.

### BACKGROUND OF THE INVENTION

A consumption meter converts a measured quantity value to a consumed quantity. As an example, an ultrasonic flow meter may measure a time delay between counter-propagating ultrasonic waves in a medium flow, in order to determine a corresponding consumption of the medium, such as a consumption of hot or cold water.

A consumption meter is typically an advanced piece of equipment which may comprise delicate electronic equipment as well as delicate mechanical equipment in order to accurately determine the consumed quantity.

In some applications, the consumption meter needs to operate in potentially harmful conditions, such as conditions where it may be exposed to water or moist, e.g. in the form of condense. In addition, the consumption meter may also be exposed to particle dust or other potentially harmful materials. As an example, a consumption meter for measuring consumed cold water where the consumption meter is operating in a warm location is typically exposed to condense water.

A known way of rendering consumption meters robust to penetration of water and dust is to provide a hermetically sealed casing for sealing off the internal parts of the meter. However, hermetically sealed casings are often costly to mount, and typically include parts, such as gaskets, fittings, etc. that also adds to the cost of the meter. Moreover, such devices may be difficult to operate, due to limitations set by the hermetically sealed casing.

Hence, an improved consumption meter would be advantageous, and in particular it would be advantageous to provide a consumption meter which is cost-efficient to fabricate and which is capable of operating in a wet, moist or dusty environment or an environment where the consumption meter is exposed to temperature differences.

### SUMMARY OF THE INVENTION

In particular, it may be seen as an object of the present invention to provide a consumption meter that is cost efficient and simple to fabricate and which furthermore is robust and suitable for use in a wet, moist or dusty environment or in an environment where the consumption meter is exposed to temperature differences. It is a further object of the present invention to provide an alternative to the prior art.

A polymer material is at least to some extend permeable to water. Thus for prolonged use, such as use up to many years, water from the surroundings may penetrate a polymer material. A consumption meter with a simple polymer-based casing is therefore prone to water and/or oxygen exposure, and any metallic parts inside the casing, such as electronic parts, is thereby prone to corrosion and other problems which may cause operational problems of the consumption meter. A polymer-based consumption meter is however nevertheless a very attractive material regarding production costs.

The above-described object and several other objects are intended to be obtained in a first aspect of the invention by providing a consumption meter for measuring a quantity value corresponding to a consumed quantity, the consumption meter comprising:
- a measuring means for measuring the quantity value;
- an electronic circuit for operating the consumption meter;
- a display operatively connected to the electronic circuit; and
- a polymer-based casing for housing the measuring means, the electronic circuit and the display;
wherein the polymer-based casing comprising a first integral casing part and a cover, wherein the cover is transparent or at least comprises a transparent area, and wherein the cover or at least the transparent area comprises at least two cover layers:
a first cover layer having a first water permeability, and
at least a second cover layer having at least a second water permeability and;
wherein the at least second water permeability is lower than the first water permeability.

The inventors of the present invention have realized that in order to reduce the moist exposure of the electronic parts, the electronic parts should preferably be housed by a casing with very low or no water leak. However, by encapsulating the display, the casing needs a transparent area otherwise it would not be possible to visually readout the consumption meter. This, however, introduces the problem that water permeability through a transparent polymer is high.

Embodiments of the present invention solve the above-mentioned problems by a solution which renders the transparent cover impermeable to water, or at least reduces the water leakage through the cover. A solution is provided where the cover is provided with at least two layers where at least the first layer is polymer-based and where the water permeability of the first and the at least second cover layers are selected so that the water permeability of the second cover layer is lower than the water permeability of the first cover layer. The water leakage through the transparent area can thereby be reduced since the total water permeability of the at least two cover layers will become very low. By having a first cover layer with a first water permeability and an at least second cover layer with a lower second water permeability, the water permeability is given by the combination of the casing parts. The material of first cover layer may be chosen on such requirements as transparency and robustness with respect to general handling of the consumption meter, and the desired water permeability may be obtained by a proper choice of the at least second cover layer.

By providing a consumption meter in accordance with embodiment of the present invention, a consumption meter may be provided which is cost-effective to fabricate since the main parts of the casing are polymer based, which still seal off electrical elements from potentially harmful moist exposure from the surroundings, and which ensures visual contact to a housed display. Especially a consumption meter is provided which may not be influenced by condense water for prolonged used, such as more that 10 years, 15 years or even 20 years. The expected life-span for the consumption meter may thereby be so long that an interchanging of the entire consumption meter is more advantageous than to interchange specific elements, such as a battery, of the consumption meter since it is more cost-efficient with respect to fabrication, storage as well as the time it takes to replace the entire consumption meter as compared to repairing the meter.

The cover comprises a transparent area. In the context of the present disclosure, transparent should be construed broadly. Transparent should be construed so that a viewer of the housed display can view the display in a sufficient clear way. Thus, some reduction or distortion in the transmitted light can be accepted.

The material of the polymer-based casing part may be selected to be a material with a water permeability being at least 10 times lower than the water permeability of the first cover layer, such as 25 times lower, such as 50 times lower, such as 100 times lower or even lower. As an example, a material may be selected as a material with a water permeability coefficient that is less than 1 gram per day per millimetre thickness per square meter (1 g mm / m² day).

The presence of a transparent area introduces a joint between the cover, or transparent area, and the rest of the casing. This may introduce a leak channel. By providing a desiccant inside the casing any water leakage through the joint between the transparent area and the rest of the casing is trapped inside the casing and will therefore not cause problems to the housed electrical elements.

The desiccant may be selected from the group of silica gel or calcium chloride or any other suitable drying agent. Silica gel has the advantage that it is noncorrosive. Calcium chloride or other corrosive agents may be contained in a holder. The amount of desiccant necessary may depend upon the intended situation of use and material choice of the of the consumption meter. In embodiments 5 grams, 10 grams, 25 grams or even more may be used, either in bagged form or contained in a holder. In embodiments, the amount of desiccant is selected so that at least 0.5 gram/year of water can be contained for at least 15 years, such as between 0.1 gram/year to 1 gram/year for at least 10 to 20 years.

At least two cover layers may be provided, however for some applications it may be advantageous to provide more than two cover layers, such as at least three, or even more, such as a stack of cover layers. In an exemplary embodiment, the stack of cover layers may comprise alternating layers of at least two different materials. By providing a number of layers extremely low total or overall water permeability may be obtained. Moreover, a given total or overall water permeability may even be provided by selecting the number of layers.

In an embodiment, the materials of the cover layers are selected with respect to further given species, in such embodiments, the permeability of further casing parts are lower with respect to the given species while maintaining the low water permeability. For example in a three layer cover, the first polymer-based cover has a specific permeability of water *and* oxygen. The second cover layer has a permeability which is lower for water, whereas the third cover layer has a permeability which is lower for oxygen. Such embodiments may be advantageous for materials which have a large difference in the permeability for different molecules.

In general, the at least second water permeability may be 10 times lower than the first water permeability, such as between 10 and 100 times, such as between 25 and 75 times, such as 50 times, or even more than 100 times lower. In general, the water permeability ratio between the first and the at least second casing part is determined from a compromise between as high a ratio as possible and other factors relating to the choice of materials for the consumption meter.

In general the material of the first integral casing part as well as the first cover layer may be selected based on a compromise between such properties as: stable in water, strong, shape stable, low absorption of water, low water permeability, price, and stable in sunlight.

In an advantageous embodiment, the material of the first integral casing part is a fibre reinforced polymer material, such as a composite polymer material comprising fibres. In general, any suitable fibre reinforcement may be applied, such as a reinforced polymer composite comprising such fibres as glass-fibres, carbon fibres, including carbon nano tube based fibres and mineral fibres. It is an advantage to reinforce the first polymer based casing part, in order to improve the strength of the casing of the consumption meter. The polymer material may comprise between 1% and 60% fibre material, such as between 5% and 40% fibre material, such as between 10% and 30% fibre material, such as 20% fibre material.

In embodiments, the first integral casing part comprises a material selected in the group of: PolyPhenylene Sulfide (PPS), Polyether Sulphone (PSU), PolyPhenylene Sulfone (PPSU), PolyPhenylene Oxide (PPO), PolyStyrene (PS), PolyEthylene Imine (PEI), PolyButylene Terephthalate (PBT), Parylene, Polyester, Acrylonitrile Butadiene Styrene (ABS), PolyButylene Terephthalate (PBT), Liquid Crystal Polymer (LCP), CycloOlefin Copolymer (COC), PolyMethyl MethAcrylate (PMMA), PolyPropylene (PP), PolyEthylene (PE), PolyTetraFluoroEthylene (PTFE), PolyPhenylene Ether (PPE), PolyStyrene (PS), PolyCarbonate (PC), PolyEtherImide (PEI), PolyEtherEtherKetones (PEEK), Polyethylene Terephtalate (PET), PolyAmide (PA), Thermoplastic Polyurethane (TPU) and blends thereof.

At least PPS is very stable under prolonged water exposure, it has low water permeability and it is a fairly strong material, as compared to other polymer materials. PPS and other known materials with similar properties are opaque and therefore not suitable as material for the first layer of the cover.

In an embodiment, a material selected form the above listed group may be reinforced by a fibre-based material.

In an advantageous embodiment, the first casing part is made in a mouldable polymer material, such as in a thermo-plastic material or other suitable mouldable materials.

In embodiments, the first polymer-based cover layer comprises a material selected in the group of: PolyMethyl MethAcrylate (PMMA), PolyCarbonate (PC), Polyethylene Terephtalate (PET) or Thermoplastic Polyurethane (TPU).

In an advantageous embodiment, the second cover layer is a coating of the first cover layer. In an exemplary embodiment the coating is done by a thin film deposition technique, including but not limited to dipping, painting, spraying, laminating, atomic layer deposition (ALD), molecular beam epitaxy (MBE), chemical vapour deposition (CVD, PE-CVD, etc.), physical vapour deposition (PVD) and pulsed laser deposition (PLD). The specific deposition technique may be selected in accordance with desired material choices.

In advantageous embodiments, the coating may be by a layer selected from the group of: a layer of paint, a layer of rubber, a layer of tar, a layer of paint comprising a filler material, a layer of glass material, a layer of metal, a layer of ceramic, a layer of polymer, a layer of resin, a layer of metal-oxide, a layer of silicon oxide. The silicon oxide may be mono-oxide, di-oxide or a combination of different silicon oxides. The silicon oxide may be in any form, including but not limited to crystalline, semi-crystalline and amorphous, and a layer of silicon nitride on the general form of SiₓO_{y}N_{z}.

In an advantageous embodiment, the casing may comprise a hydrophobic casing part or modified to be a hydrophobic material. The hydrophobic casing part may be provided onto an outer side of the casing. A hydrophobic casing part may add to the sealing effect since water droplets will not easily remain on the surface.

In advantageous embodiments, the casing further houses a number of components including, but not being limited to: a power supply for powering the consumption meter, a transmitter for transmitting the quantity value; an optical communication unit being operatively connected to the electronic unit. By providing one or more, or even all of such components inside the casing, the expected live-span of the consumption meter may increase, since these components are not exposed to moist or other materials.

In an embodiment, the integral casing part may also be provided with one or more cover layers, such as at least one casing layer. The integral casing part has a third water permeability, and the at least one casing layer has at least a fourth water permeability, and the at least fourth water permeability is lower than the third water permeability.

The at least one casing layer may be provided in a similar material, in a similar manner and with similar properties as the second cover layer. Thus all features described in connection with the second cover layer may mutatis mutandis be applied in connection with the casing layer.

The invention further relates to a flow meter for measuring a medium flow through a flow passage, the flow meter comprising a consumption meter according to the first aspect of the invention and a flow passage, the consumption meter being connected to the flow passage. The medium flow may be a flow of cold or hot water.

This aspect of the invention is a particularly, but not exclusively, advantageous application of the consumption meter.

In an advantageous embodiment, the consumption meter is an ultrasonic flow meter.

The first and second aspect of the present invention may each be combined with any of the other aspects. These and other aspects of the invention will be apparent from and elucidated with reference to the embodiments described hereinafter.

### BRIEF DESCRIPTION OF THE FIGURES

Embodiments of the invention will be described, by way of example only, with reference to the Figures, in which
FIG. 1 schematically illustrates a perspective view of a consumption meter in the form of a complete unit;
FIG. 2 schematically illustrates an exploded view of a consumption meter; and
FIG. 3 schematically illustrates a cross-section of a cover.

### DESCRIPTION OF EMBODIMENTS

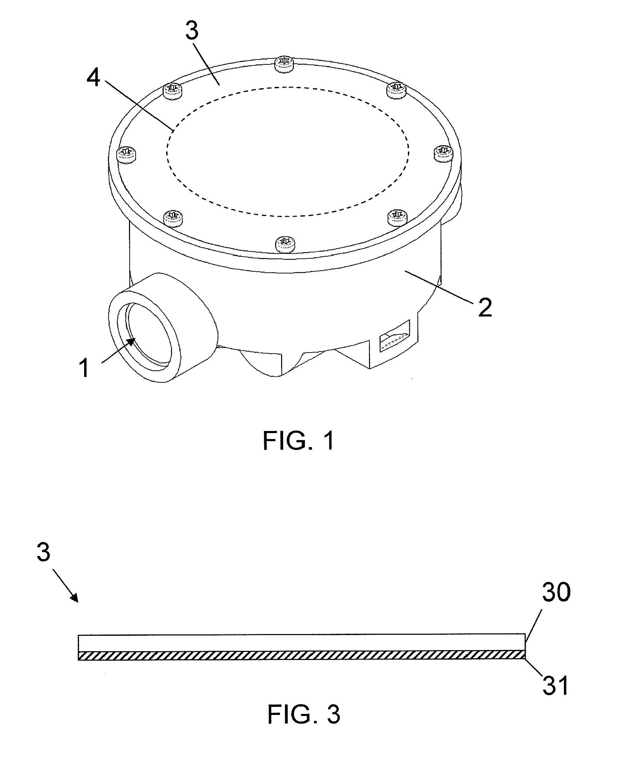

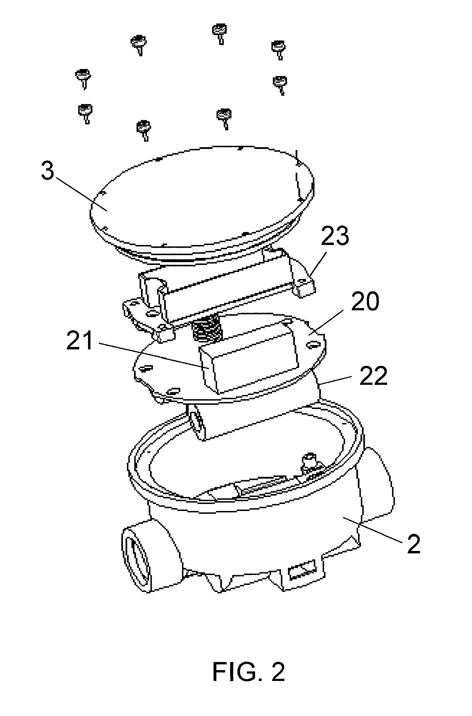

FIG. 1 illustrates in a schematic perspective view a consumption meter in the form of a complete unit, and FIG. 2 shows an exploded view of the consumption meter of FIG. 1.

The consumption meters as illustrated in the figures are consumption meters in the form of an ultrasonic flow meter. Other types of consumption meters also fall under the scope of the invention.

The working principle of an ultrasonic flow meter is well known to the skilled person, and will not be elucidated upon in detail here. The flow meter comprises a flow passage 1. Ultrasonic transducers for generating and detecting ultrasonic signals are placed so that the generated signals can be introduced into the measuring section 22 of the flow passage. The flow passage furthermore comprises reflectors, so that the signals emitted from the transducers are directed in opposite directions along the flow passage, and directed onto the opposite transducer for detection.

In a typical determination of a fluid flow, ultrasonic signals are simultaneously emitted from the two ultrasonic transducers. Signals propagating upstream propagate faster than signals propagating downstream, and the flow rate can be determined by measuring difference in arrival time of the emitted signals at the other transducers. The determination of the flow rate, as well as the outputting of the flow rate may be done by an analogue or digital unit electrically connected to the transducers.

Embodiments of the consumption meter in accordance with the present invention comprise measuring means for measuring the quantity value. For an ultrasonic flow meter, the measuring means includes the ultrasonic transducers as well as any means for determining the difference in arrival time of the emitted signals, and any means for converting and outputting the measured quantities to a consumed quantity value. Such means are typically in the form of an integrated electronic circuit implemented on a PCB 20.

The consumption meter may further comprise a transmitter for transmitting the quantity value, e.g. in the form of an antenna formed on a side PCB. Specific requirements to the antenna are known to the skilled person. In the context of embodiments of the present invention, any suitable antenna may be provided for wireless transmission of the quantity value. In an embodiment, the antenna may also be used for receiving signals, so that a two-way communication link to the consumption meter may be established. The antenna may be electrically connected to the electronic circuit via the PCB.

The consumption meter may further comprise a power supply 21 for powering the consumption meter, here in the form of a battery attached to the PCB. The battery 21 is electrically connected to the electronic circuit via the PCB. In embodiments, the power supply may also be provided via an attached supply wire (not show), such as a grid supply wire introduced into the consumption meter via a leak tight connection.

The PCB 20 illustrated in FIG. 2 does not show any specific electrical components, except for the battery 21, however it is clear to the skilled person that such components are present.

FIGS. 1 and 2 illustrates in a schematic perspective view, a consumption meter in accordance with embodiments of the present invention. The casing comprises at least two parts, a first integral casing part 2 and a cover 3. A number of suitable casing materials for the first integral part are not transparent, i.e. they are opaque, therefore in order to ensure visual connection to a housed display, a transparent area may be provided, the transparent area may be in the form of an entire transparent cover, or a cover comprising a transparent region 4.

A desiccant holder 23 is illustrated. It may be advantageous to provide a holder to contain the desiccant to avoid that the drying agent of the desiccant get in contact with the electronic parts of the consumption meter.

The first polymer-based casing part 2 is typically fabricated in a robust solid polymer material, sufficiently robust to stand normal handling of the consumption meter, such as handling in connection with installation of a consumption meter.

As schematically illustrated in FIG. 3, the cover 3 comprises at least two components or layers, a first polymer-based layer 30 having a first water permeability and an at least a second layer 31 having an at least second water permeability.

The first cover layer may be made in a transparent polymer material.

The second cover layer may be provided by coating the first cover layer. The coating may be done by any suitable technique. The second layer may be sprayed onto the inside of the first cover layer, for example by spraying or by other means providing a layer of paint, a layer of rubber, a layer of tar, a layer of paint comprising a filler material or a layer of resin.

In an embodiment, the at least second cover layer may be provided by CVD, such as PE-CVD, e.g. for providing a layer of glass material, a layer of metal, a layer of ceramic, a layer of silicon oxide or a layer of silicon nitride.

Even though only two layers are shown in FIG. 3 multiple layers may be provided in the form of a stack of layers 31. The stack of layers may be a stack comprising an alternate stacking of at least two materials. In an embodiment, the stack is provided by an alternate stacking of a polymer and silicon oxide, either silicon di-oxide, mono-oxide or mixed silicon oxide. A layer of silicon oxide and other glass types are known to form pin-holes when deposited onto a polymer surface. By providing alternate silicon oxide layers and polymer layers, the number of pin-holes may at least to a large extend be removed, or their effect eliminated.

Each layer in the stack of layers may have a thickness in the range of 10 nanometers to 5 micrometer, such as 100 nanometers to 1 micrometer, such as 250 nanometers to 750 nanometers, such as 500 nanometers. Layers or groups of layers need not be of equal thickness. For example, in a stack comprising alternating layers of a polymer material and silicon oxide, the polymer material may be provided with a larger thickness than the silicon oxide layers. Thicknesses in the lower end of the ranges may be preferred in embodiments.

In general, the thickness of the first casing part may range between a fraction of a millimeter and up to few millimeters.

The transparent area may be leak-tightly mounted into the first casing part, e.g. by, welding, gluing or by use of a seal. Suitable materials for the cover may be Acryl (PMMA), TPU, PC or other transparent polymer materials. The transparent area may be fixed by means of fixing means, such as by means of a collar holding sealing means, such as one or more O-rings, and fixed by screws. It may be an advantage to use an O-ring based sealing, since this allows a dismount of the casing of the consumption meter.

In an embodiment, the first integral casing part is fabricated in the polymer material PPS, whereas the first cover layer is of PMMA covered with a thin layer of glass.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A consumption meter for measuring a quantity value corresponding to a consumed quantity, the consumption meter comprising:
- a measuring means for measuring the quantity value;
- an electronic circuit for operating the consumption meter;
- a display operatively connected to the electronic circuit; and
- a polymer-based casing for housing the measuring means, the electronic circuit and the display;
wherein the polymer-based casing comprising a first integral casing part and a cover, wherein the cover is transparent or at least comprises a transparent area, and wherein the cover or at least the transparent area comprises at least two cover layers:
a first cover layer having a first water permeability, and
at least a second cover layer having at least a second water permeability and;
wherein the at least second water permeability is lower than the first water permeability.

2. The consumption meter according to claim 1, wherein the polymer-based casing further houses a desiccant.

3. The consumption meter according to any of the preceding claims, wherein the water permeability of the material of the polymer-based casing is at least 10 times lower than the water permeability of the first cover layer.

4. The consumption meter according any of the preceding claims, wherein the second water permeability is at least 10 times lower than the first water permeability.

5. The consumption meter according to any of the preceding claims, wherein the first integral casing part is made in a mouldable polymer material.

6. The consumption meter according to any of the preceding claims, wherein the material of the first integral casing part is a fibre reinforced polymer material.

7. The consumption meter according to any of the preceding claims, wherein the first integral casing part comprises a material selected in the group of:
PolyPhenylene Sulfide (PPS), Polyether Sulphone (PSU), PolyPhenylene Sulfone (PPSU), PolyPhenylene Oxide (PPO), PolyStyrene (PS), PolyEthylene Imine (PEI), PolyButylene Terephthalate (PBT), Parylene, Polyester, Acrylonitrile Butadiene Styrene (ABS), PolyButylene Terephthalate (PBT), Liquid Crystal Polymer (LCP), CycloOlefin Copolymer (COC), PolyMethyl MethAcrylate (PMMA), PolyPropylene (PP), PolyEthylene (PE), PolyTetraFluoroEthylene (PTFE), PolyPhenylene Ether (PPE), PolyStyrene (PS), PolyCarbonate (PC), PolyEtherImide (PEI), PolyEtherEtherKetones (PEEK), Polyethylene Terephtalate (PET), PolyAmide (PA), Thermoplastic Polyurethane (TPU) and blends thereof.

8. The consumption meter according to any of the preceding claims, wherein the first cover layer comprises a material selected in the group of: PolyMethyl MethAcrylate (PMMA), PolyCarbonate (PC), Polyethylene Terephtalate (PET) or Thermoplastic Polyurethane (TPU).

9. The consumption meter according to any of the preceding claims, wherein the at least second cover layer is a coating of the first cover layer.

10. The consumption meter according to claim 9, wherein the coating is done by a thin film deposition technique.

11. The consumption meter according to claim 9, wherein the coating is a layer selected from the group of: a layer of paint, a layer of rubber, a layer of tar, a layer of paint comprising a filler material, a layer of glass material, a layer of metal, a layer of ceramic, a layer of polymer, a layer of resin, a layer of metal oxide, a layer of silicon oxide, and a layer of silicon nitride.

12. The consumption meter according to any of the preceding claims, wherein multiple cover layers are present in the form of a stack of layers.

13. The consumption meter according to any of the preceding claims, wherein the desiccant is selected from the group of silica gel or calcium chloride.

14. The consumption meter according to any of the preceding claims, wherein the first integral casing part comprises at least one casing layer, wherein the integral casing parts has a third water permeability, and the at least one casing layer having at least a fourth water permeability and wherein the at least fourth water permeability is lower than the third water permeability.

15. An flow meter for measuring a medium flow through a flow passage, the flow meter comprising a consumption meter according to any of the preceding claims and a flow passage, the consumption meter being connected to the flow passage.
